# EUROPEAN PATENT APPLICATION

(11) **EP 4 556 299 A1**
(43) Date of publication of application: **21.05.2025**
(21) Application number: 24815844.6
(22) Date of filing: 29.05.2024
(51) Int. Cl.: B60L 50/64, H01M 50/24, H01M 50/249, B60K 1/04

(54) **VEHICLE**

(30) Priority: 02.06.2023 KR 20230071233; 02.11.2023 KR 20230149630
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR)
(74) Representative: Plasseraud IP
(86) International application number: PCT/KR2024/007276
(87) International publication number: WO 2024/248468

(57) **Abstract**

A vehicle may include a frame, and a battery pack spaced apart from the frame. The battery pack may include a housing and a plurality of exhaust devices coupled to the housing. The vehicle may further include a foamable layer interposed between the frame and the battery pack. The foamable layer may contain a foamable refractory material.

## Description

### [Technical Field]

The present invention relates to a vehicle. More specifically, the present invention relates to an electric vehicle and a hybrid electric vehicle that use electricity as a power source. The present application claims the benefit of priority based on Korean Patent Application No. 10-2023-0071233, filed on June 2, 2023 and Korean Patent Application No. 10-2023-0149630, filed on November 2, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

The safety of a secondary battery is directly related to the life of an occupant in a vehicle, and thus, a key task in the development of technology of a secondary battery for use in a vehicle is to improve the safety of the secondary battery. To improve the safety of the secondary battery, the design of an efficient discharge path of a high-temperature gas in the secondary battery is essential.

### [Disclosure]

### [Technical Problem]

The present invention is directed to providing a vehicle with improved safety.

### [Technical Solution]

Embodiments of the present invention may provide a vehicle. The vehicle may include a frame, a battery pack spaced apart from the frame, the battery pack including a housing and a plurality of exhaust devices coupled to the housing, and a foamable layer interposed between the frame and the battery pack and containing a foamable refractory material.

The foamable layer may be in contact with the frame.

The foamable layer may be spaced apart from the battery pack.

The foamable layer may be in contact with the battery pack.

The foamable layer may be spaced apart from the frame.

The foamable layer may be in contact with each of the battery pack and the frame.

An area of the foamable layer may be approximately the same as an area of a lead plate of the battery pack.

An area of the foamable layer may be different from an area of a lead plate of the battery pack.

An area of the foamable layer may be less than an area of a lead plate of the battery pack.

An area of the foamable layer may be greater than an area of a lead plate of the battery pack.

The foamable refractory material may be configured to form a foamed layer, which is an insulating carbonized layer, when a thermal runaway event occurs in the battery pack.

The foamed layer may be porous.

A volume of the foamed layer may be greater than a volume of the foamable layer.

Another embodiment may provide a vehicle. The vehicle may include a frame, a battery pack spaced apart from the frame, the battery pack including a housing and a plurality of exhaust devices coupled to the housing, and foamable structures located between the frame and the battery pack, in which each of the foamable structures may include a capsule and a foamable material, the foamable material being located in the capsule.

Each of the foamable structures may overlap a lead plate of the battery pack.

The capsule may be configured to be damaged or decomposed when a thermal runaway event occurs in the battery pack.

The foamable material may be configured to form a foamed layer when a thermal runaway event occurs in the battery pack.

Each of the foamable structures may be coupled to the frame.

Each of the foamable structures may be coupled to the battery pack.

### [Advantageous Effects]

According to example embodiments of the present invention, a foamable layer including a foam refractory material may be provided between a frame of a vehicle and a battery pack. Accordingly, the safety of the vehicle may be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a vehicle according to example embodiments.
FIG. 2 illustrates a layout of a lead plate of a battery pack and a foamable layer.
FIG. 3 is a diagram illustrating an effect of a vehicle according to example embodiments.
FIG. 4 illustrates a vehicle according to other example embodiments.
FIG. 5 illustrates a vehicle according to other example embodiments.
FIG. 6 illustrates a layout of a lead plate of a battery pack and a foamable layer.
FIG. 7 illustrates a vehicle according to other example embodiments.
FIG. 8 illustrates a layout of a lead plate of a battery pack and a foamable layer.
FIG. 9 illustrates a vehicle according to other example embodiments.
FIG. 10 is a cross-sectional view of a vehicle according to example embodiments.
FIG. 11 illustrates a layout of a lead plate of a battery pack and foamable structures.
FIG. 12 is a cross-sectional view of a vehicle according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

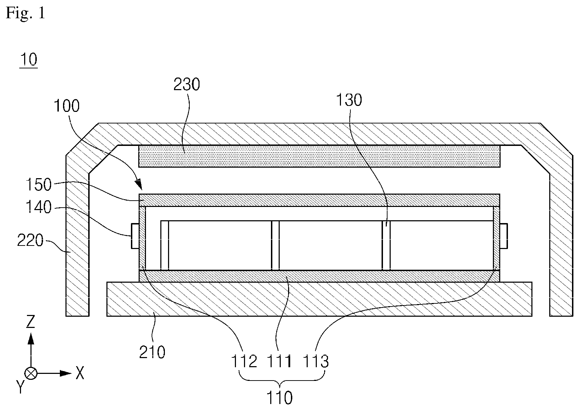

FIG. 1 illustrates a vehicle 10 according to example embodiments.

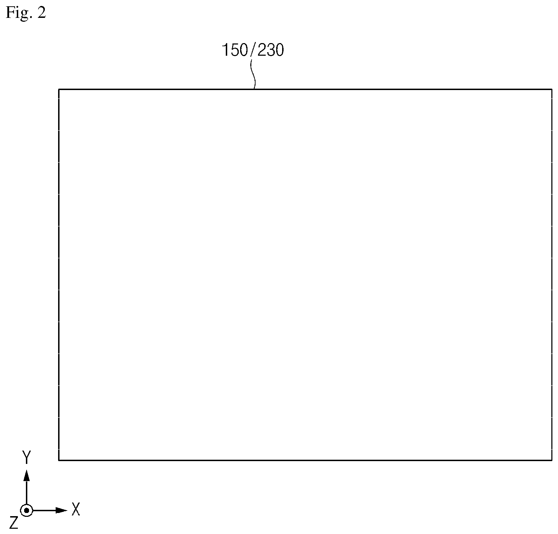

FIG. 2 illustrates a layout of a lead plate 150 of a battery pack 100 and a foamable layer 230.

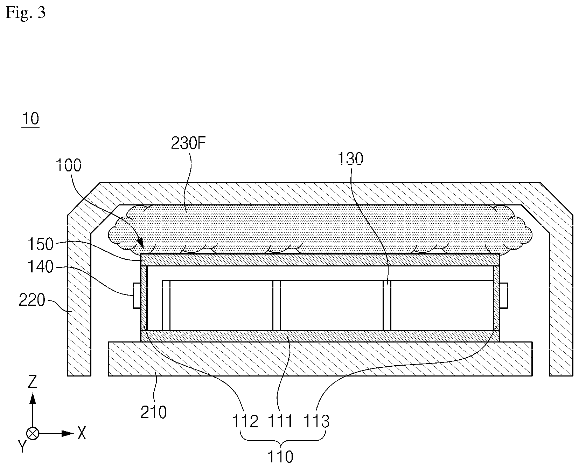

FIG. 3 is a diagram illustrating an effect of the vehicle 10 according to example embodiments.

Referring to FIGS. 1 and 2, the vehicle 10 may include the battery pack 100, a bottom panel 210, a frame 220, and the foamable layer 230.

According to example embodiments, the vehicle 10 may be a battery electric vehicle (BEV) or a hybrid electric vehicle (HEV). The vehicle 10 may be driven by electric energy stored in the battery pack 100. The vehicle 10 is not limited to a passenger car, and may be, for example, a truck, an electric scooter, an electric wheelchair, or an electric bike.

The bottom panel 210 may be a battery tray supporting the battery pack 100. The battery pack 100 may be on the bottom panel 210. The frame 220 may provide a form of the vehicle 10. The frame 220 may be a basic frame supporting mechanical components of the vehicle 10. The frame 220 may be spaced apart from the battery pack 100.

The battery pack 100 may include a housing 110, a plurality of battery cell assemblies 120, cross beams 130, a plurality of exhaust devices 140, and the lead plate 150. The battery pack 100 is a final form of a battery system mounted on a mobility or the like.

The housing 110 may provide a space for arranging the plurality of battery cell assemblies 120 therein. The housing 110 may include a base plate 111 and side walls 112 and 113.

Two directions substantially parallel to an upper surface 111U of the base plate 111 are defined as an X-axis direction and a Y-axis direction, and a direction substantially perpendicular to the upper surface 111U of the base plate 111 is defined as a Z-axis direction. The X-axis direction, the Y-axis direction, and the Z-axis direction may be substantially perpendicular to one another. Unless otherwise mentioned, the definition of directions will apply to the following drawings.

The base plate 111 may include a plurality of plates coupled to each other by friction stir welding. The base plate 111 may include a plurality of cooling channels that are flow paths of a cooling fluid. The base plate 111 may include a plurality of cavities, thus resulting in a reduction of the weight of the base plate 111. Each of the plurality of cooling channels and the plurality of cavities may extend in the X-axis direction.

The side walls 112 and 113 may be coupled to the base plate 111. The side walls 112 and 113 may be welded to the base plate 111. The side walls 112 and 113 may extend in the Z-axis direction. The side walls 112 and 113 may each include an inner empty space and thus may be light in weight. The side walls 112 and 113 may further include exhaust holes connected to exhaust devices 140 to be described below. The side walls 112 and 113 may be substantially perpendicular to the X-axis direction.

The plurality of battery cell assemblies 120 may be on the base plate 111 of the housing 110. The base plate 111 may support the plurality of battery cell assemblies 120. The side walls 112 and 113 may horizontally surround the plurality of battery cell assemblies 120.

Each of the plurality of battery cell assemblies 120 may include a plurality of battery cells and a plurality of separators. Each of the plurality of battery cell assemblies 120 may be a module type or a moduleless type. The battery cell assemblies 120 that is each the module type may include a module frame surrounding the plurality of battery cells and the plurality of separators. The battery cell assemblies 120 that is each the moduleless type may not include the module frame.

Each of the plurality of battery cells includes an electrode assembly, an electrolyte, and a case covering the electrode assembly and the electrolyte. The case may be a pouch case, a cylindrical case, or a prismatic case. The pouch case may include an aluminum laminate sheet. The prismatic case and the cylindrical case may include a metal material such as aluminum. The prismatic case may have a tetragonal column shape. The cylindrical case may have a cylindricalcolumn shape.

The electrode assembly included in the case includes a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator interposed therebetween are wound together. The stack type electrode assembly may include a plurality of positive electrodes and a plurality of negative electrodes that are stacked sequentially, and a plurality of separators interposed therebetween.

The plurality of battery cells may form a plurality of banks. The plurality of banks may include a set of battery cells connected in parallel to each other. The plurality of banks may be connected in series to each other. A current to be output by the cell stack 121 may be determined by the number of battery cells of each of the plurality of banks, and a voltage to be output by the cell stack 121 may be determined by the number of the plurality of banks.

According to example embodiments, each of the plurality of battery cell assemblies 120 may further include a plurality of separators interposed between the plurality of battery cells. The plurality of separators may horizontally support the plurality of battery cells to prevent swelling of the plurality of battery cells.

According to example embodiments, the plurality of separators may be thermal barriers. According to example embodiments, each of the plurality of separators may have a high melting temperature and a low thermal conductivity. According to example embodiments, each of the plurality of separators may include a flame retarding material such as a ceramic and a coated glass fiber. According to example embodiments, each of the plurality of separators may be configured to release a fire retarding material and a fire extinguishing agent when a thermal runaway event occurs.

The cross beams 130 may be interposed between the battery cell assemblies 120. The cross beams 130 may isolate neighboring battery cell assemblies 120 in the X-axis direction.

According to example embodiments, the battery pack 100 may further include a center beam. The center beam may be substantially parallel to the X-axis direction. The center beam may isolate the battery cell assemblies 120 adjacent to the side wall 112 in the Y-axis direction.

The plurality of exhaust devices 140 may be coupled to the housing 110. The plurality of exhaust devices 140 may be coupled to the side walls 112 and 113 of the housing 110. The plurality of exhaust devices 140 may include a rupture disk or may be a valve type. The plurality of exhaust devices 140 may be fixed to the side walls 112 and 113 through brackets

The plurality of exhaust devices 140 may isolate the inside and the outside of the battery pack 100 when the battery pack 100 is in a normal state. When a thermal runaway event occurs in the battery pack 100, the plurality of exhaust devices 140 may open a plurality of exhaust holes to provide a path for discharging a high-temperature gas to the outside.

Here, the thermal runaway occurring in the battery pack 100 is a state in which a change of temperature of the plurality of battery cell assemblies 120 accelerates the change of temperature, i.e., an uncontrollable positive feedback. The temperature of the plurality of battery cell assemblies 120 that are in a thermal runaway state sharply increase, and a large amount of high-pressure gas and combustion debris are released.

When a thermal runaway event occurs in the battery pack 100, internal pressure of the battery pack 100 increases. The plurality of exhaust devices 140 may be opened due to an increase in the internal pressure of the battery pack 100, and a high-temperature gas may be discharged from the inside of the battery pack 100 to the outside through the plurality of exhaust devices 140. Accordingly, thermal propagation may be delayed, and the stability of the battery pack 100 may be improved.

The lead plate 150 may be coupled to the side walls 112 and 113. The lead plate 150 may cover elements, such as the battery cell assemblies 120 and electronic components, inside the battery pack 100. The lead plate 150 may be fixed to the side walls 112 and 113 by a mechanical means, e.g., a bolt.

The battery pack 100 may further include interconnectors connecting adjacent battery cell assemblies 120 to each other. Accordingly, the plurality of battery cell assemblies 120 may be connected in series, and the battery pack 100 may output a high voltage.

The battery pack 100 may further include electronic components. The electronic components may include an electronic device required to drive the battery pack 100. The electronic components may be on an electronic component mounting region EMR.

The electronic components may include, for example, a battery management system (BMS). The BMS may be configured to monitor, balance, and control the battery pack 100. Monitoring of the battery pack 100 may include measuring voltages and currents of certain nodes inside the plurality of battery cell assemblies 120 and measuring temperatures at set positions in the battery pack 100. The battery pack 100 may include measuring instruments for measuring voltages, currents, and temperatures as described above.

Balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and an external load (e.g., a motor of a vehicle), when abnormal voltage such as voltage surges occurs.

Referring to FIGS. 1 to 3, the foamable layer 230 may include a foamable refractory material. Here, the foamable refractory material may be configured to have a foaming effect when heated. The foaming process may include melting of the surface coating, bubbling, swelling, insulating layer creation and ceramic layer creation.

As shown in FIG. 3, the volume of a foamed layer 230F may be greater than that of the foamable layer 230. The foamed layer 230F may fill a space between the frame 220 and the battery pack 100. The foamed layer 230F may be an insulating carbonized layer. The foamed layer 230F may be porous. The foamed layer 230F may have a high ignition point, a high melting point, and low thermal conductivity. Accordingly, a high-temperature gas and flames discharged from the plurality of exhaust devices 140 may be prevented from reaching the frame 220 of the vehicle 10, and the safety of the vehicle 10 may be improved.

According to example embodiments, the vehicle 10 may further include an on-board charger (OBC), an electric power control unit (EPCU), a driving motor, and a reducer. The OBC may be configured to convert alternating-current (AC) power supplied to the vehicle 10 into direct-current (DC) power. The driving motor may be configured to provide a torque based on electric energy from the battery pack 100. The reducer may be configured to adjust the number of rotations of the motor to control the torque.

According to example embodiments, the foamable layer 230 may be on the frame 220. The foamable layer 230 may be provided by a method such as painting, coating, or spraying. The foamable layer 230 may be interposed between the frame 220 and the battery pack 100. The foamable layer 230 may be in contact with the frame 220. The foamable layer 230 may be spaced apart from the battery pack 100.

An area of the foamable layer 230 may be substantially the same as an area of the lead plate 150. A length of the foamable layer 230 in the X-axis direction may be substantially the same as a length of the lead plate 150 in the X-axis direction. A length of the foamable layer 230 in the Y-axis direction may be substantially the same as a length of the lead plate 150 in the Y-axis direction.

### (Second Embodiment)

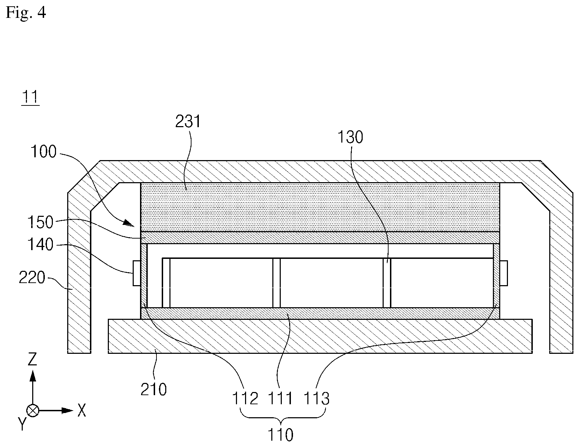

FIG. 4 illustrates a vehicle 11 according to other example embodiments.

Referring to FIG. 4, the vehicle 11 may include a battery pack 100, a bottom panel 210, a frame 220, and a foamable layer 231.

The battery pack 100, the bottom panel 210, and the frame 220 are substantially the same as those described above with reference to FIGS. 1 to 3 and thus a redundant description thereof is omitted here.

According to example embodiments, the foamable layer 231 may include a foam refractory material. The foamable layer 231 may be interposed between the frame 220 and the battery pack 100. The foamable layer 231 may be in contact with each of the frame 220 and the battery pack 100. According to example embodiments, a sufficient amount of foaming refractory material is interposed between the frame 220 and the battery pack 100 to improve the safety of the vehicle 11.

### (Third Embodiment)

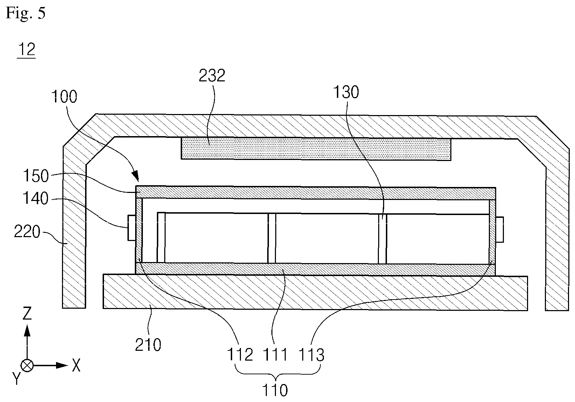

FIG. 5 illustrates a vehicle 12 according to other example embodiments.

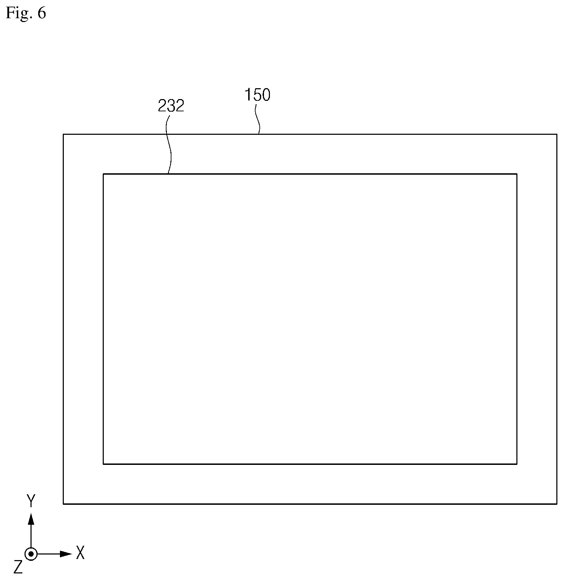

FIG. 6 illustrates a layout of a lead plate 150 of a battery pack 100 and a foamable layer 232.

Referring to FIGS. 5 and 6, the vehicle 12 may include the battery pack 100, a bottom panel 210, a frame 220, and the foamable layer 232.

The battery pack 100, the bottom panel 210, and the frame 220 are substantially the same as those described above with reference to FIGS. 1 to 3 and thus a redundant description thereof is omitted here.

According to example embodiments, the foamable layer 232 may be on the frame 220. The foamable layer 232 may be interposed between the frame 220 and the battery pack 100. The foamable layer 232 may be in contact with the frame 220. The foamable layer 232 may be spaced apart from the battery pack 100.

An area of the foamable layer 232 may be different from an area of the lead plate 150. The area of the foamable layer 232 may be less than the area of the lead plate 150. A length of the foamable layer 232 in the X-axis direction may be different from a length of the lead plate 150 in the X-axis direction. The length of the foamable layer 232 in the X-axis direction may be less than the length of the lead plate 150 in the X-axis direction. A length of the foamable layer 232 in the Y-axis direction may be different from a length of the lead plate 150 in the Y-axis direction. The length of the foamable layer 232 in the Y-axis direction may be less than the length of the lead plate 150 in the Y-axis direction.

According to example embodiments, the weight of the vehicle 12 and manufacturing costs of the vehicle 12 may be reduced by providing the foamable layer 232 having the area less than the area of the lead plate 150.

### (Fourth Embodiment)

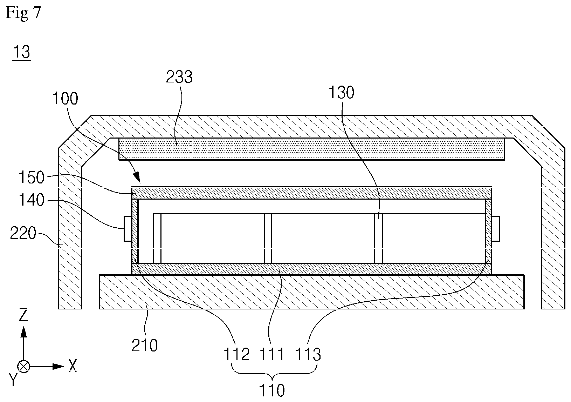

FIG. 7 illustrates a vehicle 13 according to other example embodiments.

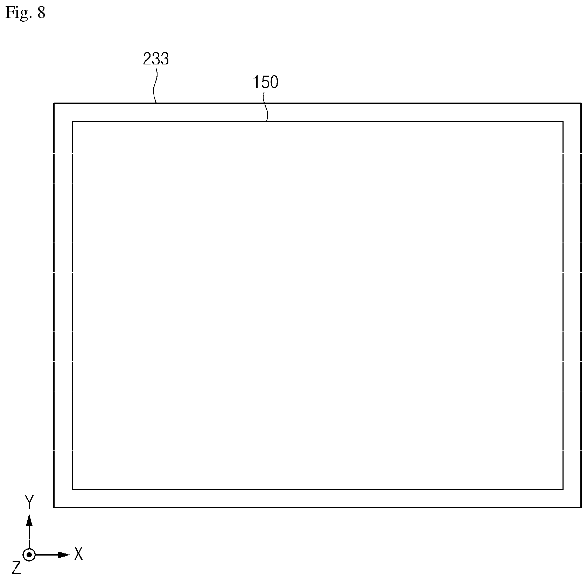

FIG. 8 illustrates a layout of a lead plate 150 of a battery pack 100 and a foamable layer 233.

Referring to FIGS. 7 and 8, the vehicle 13 may include the battery pack 100, a bottom panel 210, a frame 220, and the foamable layer 233.

The battery pack 100, the bottom panel 210, and the frame 220 are substantially the same as those described above with reference to FIGS. 1 to 3 and thus a redundant description thereof is omitted here.

According to example embodiments, the foamable layer 233 may be on the frame 220. The foamable layer 233 may be interposed between the frame 220 and the battery pack 100. The foamable layer 233 may be in contact with the frame 220. The foamable layer 233 may be spaced apart from the battery pack 100.

An area of the foamable layer 233 may be different from an area of the lead plate 150. The area of the foamable layer 233 may be greater than the area of the lead plate 150. A length of the foamable layer 233 in the X-axis direction may be different from a length of the lead plate 150 in the X-axis direction. The length of the foamable layer 233 in the X-axis direction may be greater than the length of the lead plate 150 in the X-axis direction. A length of the foamable layer 233 in the Y-axis direction may be different from a length of the lead plate 150 in the Y-axis direction. The length of the foamable layer 233 in the Y-axis direction may be greater than the length of the lead plate 150 in the Y-axis direction.

According to example embodiments, a sufficient amount of foaming refractory material is interposed between the frame 220 and the battery pack 100 to improve the safety of the vehicle 13.

### (Fifth Embodiment)

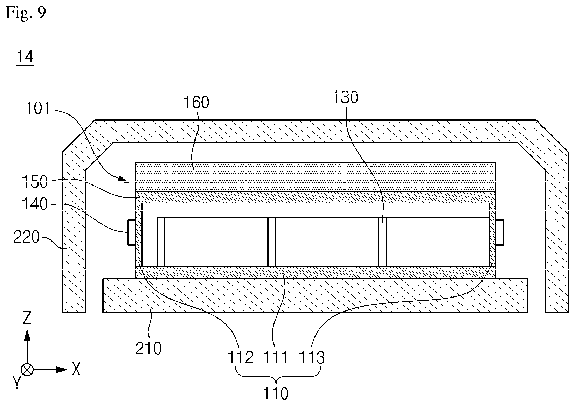

FIG. 9 illustrates a vehicle 14 according to other example embodiments.

Referring to FIG. 9, the vehicle 14 may include a battery pack 100, a bottom panel 210, and a frame 220.

The battery pack 100, the bottom panel 210, and the frame 220 are substantially the same as those described above with reference to FIGS. 1 to 3 and thus a redundant description thereof is omitted here.

According to example embodiments, the battery pack 100 may include a housing 110, a plurality of battery cell assemblies 120, cross beams 130, a plurality of exhaust devices 140, a lead plate 150, and a foamable layer 160. The housing 110, the plurality of battery cell assemblies 120, the cross beams 130, the plurality of exhaust devices 140, and the lead plate 150 are substantially the same as those described above with reference to FIGS. 1 to 3 and thus a redundant descriptions thereof is omitted here.

According to example embodiments, the foamable layer 160 may be on the battery pack 100. According to example embodiments, the foamable layer 160 may be on the lead plate 150 of the battery pack 100. According to example embodiments, the foamable layer 160 may be in contact with the battery pack 100. According to example embodiments, the foamable layer 160 may be in contact with the lead plate 150 of the battery pack 100.

The foamable layer 160 may be interposed between the frame 220 and the battery pack 100. The foamable layer 160 may be spaced apart from the frame 220.

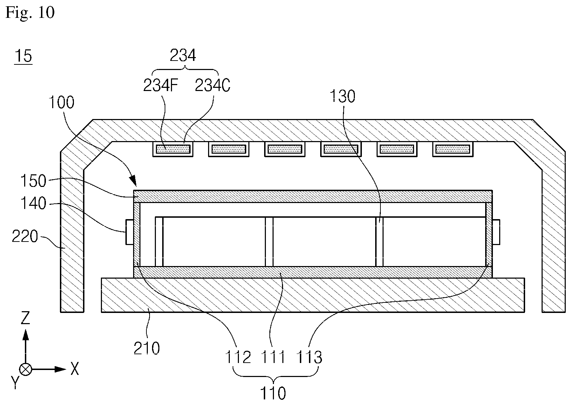

FIG. 10 is a cross-sectional view of a vehicle 15 according to example embodiments.

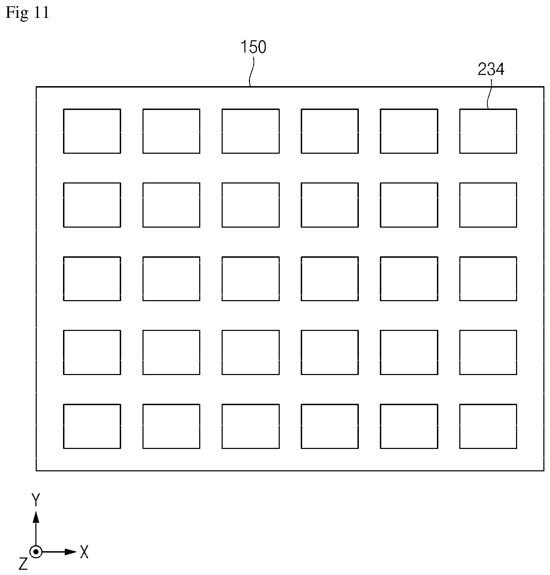

FIG. 11 illustrates a layout of a lead plate 150 of a battery pack 100 and foamable structures 234.

Referring to FIGS. 10 and 11, the vehicle 15 may include a battery pack 100, a bottom panel 210, a frame 220, and the foamable structures 234.

The battery pack 100, the bottom panel 210, and the frame 220 are substantially the same as those described above with reference to FIGS. 1 to 3 and thus a redundant description thereof is omitted here.

Each of the foamable structures 234 may be interposed between the lead plate 150 of the battery pack 100 and the frame 220 of the vehicle 15. In the present example, each of the foamable structures 234 may be coupled to the frame 220 of the vehicle 15.

According to example embodiments, each of the foamable structures 234 may overlap the lead plate 150 in the Z-axis direction. According to example embodiments, the foamable structures 234 may be arranged in a matrix along the X-axis direction and the Y-axis direction. FIG. 11 illustrates, for example, the foamable structures 234 arranged in five rows and six columns, and the number and arrangement of the foamable structures 234 may be changed according to the design of the battery pack 100 and the design of the bottom panel 210 and the frame 220.

According to example embodiments, each of the foamable structures 234 may include a foamable material 234F and a capsule 234C. The foamable material 234F may be included in the capsule 234C. The foamable material 234F may have fire resistance, high specific heat, and low thermal conductivity. Accordingly, when a thermal runaway event occurs in the battery pack 100, the foamable material 234F of each of the foamable structures 234 may form a foamed layer. Due to the formation of the foamed layer, the capsules 234C may be damaged or decomposed and a space between the battery pack 100 and the frame 220 may be filled with the foamed layer. The capsule 234C may be, for example, pyrolytic or be damaged by pressure of the foamed layer.

According to example embodiments, height of the foamed layer may be in a range of about 5 mm to about 50 mm. According to example embodiments, the height of the foamed layer may be about 10 mm or more. According to example embodiments, the height of the foamed layer may be about 15 mm or more. According to example embodiments, the height of the foamed layer may be about 40 mm or less. According to example embodiments, the height of the foamed layer may be about 30 mm or less. According to example embodiments, the height of the foamed layer may be about 20 mm or less.

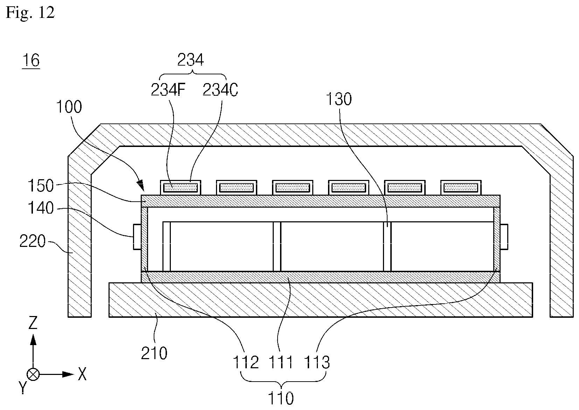

FIG. 12 is a cross-sectional view of a vehicle 16 according to example embodiments.

Referring to FIG. 12, the vehicle 16 may include a battery pack 100, a bottom panel 210, a frame 220, and foamable structures 234.

The battery pack 100, the bottom panel 210, and the frame 220 are substantially the same as those described above with reference to FIGS. 1 to 3 and thus a redundant description thereof is omitted here.

The vehicle 16 of the present example is the same as the vehicle 15 of FIG. 10, except that each of the foamable structures 234 is coupled to the lead plate 150 of the battery pack 100.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A vehicle comprising:
a frame;
a battery pack spaced apart from the frame, the battery pack comprising a housing and a plurality of exhaust devices coupled to the housing; and
a foamable layer interposed between the frame and the battery pack and containing a foamable refractory material.

2. The vehicle of claim 1, wherein the foamable layer is in contact with the frame.

3. The vehicle of claim 2, wherein the foamable layer is spaced apart from the battery pack.

4. The vehicle of claim 1, wherein the foamable layer is in contact with the battery pack.

5. The vehicle of claim 2, wherein the foamable layer is spaced apart from the frame.

6. The vehicle of claim 1, wherein the foamable layer is in contact with each of the battery pack and the frame.

7. The vehicle of claim 1, wherein an area of the foamable layer is the same as an area of a lead plate of the battery pack.

8. The vehicle of claim 1, wherein an area of the foamable layer is different from an area of a lead plate of the battery pack.

9. The vehicle of claim 1, wherein an area of the foamable layer is less than an area of a lead plate of the battery pack.

10. The vehicle of claim 1, wherein an area of the foamable layer is greater than an area of a lead plate of the battery pack.

11. The vehicle of claim 1, wherein the foamable refractory material is configured to form a foamed layer when a thermal runaway event occurs in the battery pack, the foamed layer being an insulating carbonized layer.

12. The vehicle of claim 11, wherein the foamed layer is porous.

13. The vehicle of claim 11, wherein a volume of the foamed layer is greater than a volume of the foamable layer.

14. A vehicle comprising:
a frame;
a battery pack spaced apart from the frame, the battery pack comprising a housing and a plurality of exhaust devices coupled to the housing; and
foamable structures between the frame and the battery pack,
wherein each of the foamable structures includes a capsule and a foamable material, the foamable material being in the capsule.

15. The vehicle of claim 14, wherein each of the foamable structures overlaps a lead plate of the battery pack.

16. The vehicle of claim 14, wherein the capsule is configured to be damaged or decomposed when a thermal runaway event occurs in the battery pack.

17. The vehicle of claim 14, wherein the foamable material is configured to form a foamed layer when a thermal runaway event occurs in the battery pack.

18. The vehicle of claim 14, wherein each of the foamable structures is coupled to the frame.

19. The vehicle of claim 14, wherein each of the foamable structures is coupled to the battery pack.
